# EUROPEAN PATENT SPECIFICATION

(11) **EP 3 002 348 B1**
(45) Date of publication and mention of the grant of the patent: **04.12.2019**
(21) Application number: 15187651.3
(22) Date of filing: 30.09.2015
(51) Int. Cl.: C23C 4/02, C23C 28/00, C23C 28/04, C23C 4/10, C23C 4/18, F01D 25/00, F01D 5/28, C23C 4/11, C23C 4/134

(54) **PROCESS FOR COATING GAS TURBINE ENGINE COMPONENTS COMPRISING MULTI-PHASE PRE-REACTED THERMAL BARRIER COATINGS AND COATED GAS TURBINE ENGINE COMPONENTS**
VERFAHREN ZUM BESCHICHTEN VON GASTURBINENMOTORKOMPONENTEN MIT MEHRPHASIGEN VORREAGIERTEN WÄRMEDÄMMSCHICHTEN UND BESCHICHTETE GASTURBINENMOTORKOMPONENTEN
PROCÉDÉ DE REVÊTEMENT DES COMPOSANTS DE MOTEUR DE TURBINE À GAZ COMPRENANT DES REVÊTEMENTS BARRIÈRES THERMIQUES AVEC DES PHASES MULTIPLES PRÉRÉAGISSÉS ET DES COMPOSANTS DE MOTEUR DE TURBINE À GAZ REVÊTUS

(30) Priority: 30.09.2014 US 201462058047 P
(43) Date of publication of application: 06.04.2016
(73) Proprietor: United Technologies Corporation, Farmington, CT 06032 (US)
(72) Inventor: READ, Kathryn S., Colchester, CT 06415 (US); ZALESKI, Elisa M., Manchester, CT 06040 (US); BOCHIECHIO, Mario P., Vernon, CT 06066 (US)
(74) Representative: Dehns

(56) References cited:
- EP-A1- 1 428 902
- EP-A1- 1 806 423
- EP-A1- 2 233 600
- EP-A2- 1 806 431
- EP-A2- 2 766 504
- US-A1- 2014 065 408

## Description

### BACKGROUND

The present disclosure relates to gas turbine engine components coated with thermal barrier coating (TBC) compositions designed to withstand infiltration from molten environmental contaminant infiltration and processes for coating same.

Gas turbine engines typically include a compressor to pressurize airflow, a combustor to burn a hydrocarbon fuel in the presence of the pressurized air, and a turbine to extract energy from the resultant combustion gases. The combustor and the turbine form the hot section of the engine and components therein often include a thermal barrier coating.

Thermal insulation provided by the TBC enables hot section components to survive higher operating temperatures and can increase both component and engine durability. The TBC is typically a refractory ceramic material deposited on a bond coat to form what may be termed a TBC system. Bond coat materials widely used in TBC systems include oxidation-resistant overlay coatings such as MCrAlX (where M is iron, cobalt and/or nickel, X is yttrium or another rare earth element, and Hf, Si or other transition metal elements can be added as minor constituents), and diffusion coatings such as diffusion aluminides that contain aluminum intermetallics.

Ceramic materials and particularly binary yttria-stabilized zirconia (YSZ) are widely used as TBC materials because of their high temperature capability, low thermal conductivity, and relative ease of deposition such as by air plasma spraying (APS), flame spraying such as high-velocity oxy-fuel (HVOF), physical vapor deposition (PVD) and other techniques.

Under service conditions, these TBC coated hot section engine components can be susceptible to various modes of damage, including erosion, oxidation and corrosion from exposure to the gaseous products of combustion, foreign object damage and attack from environmental contaminants. Contaminants including Calcium Magnesium Alumino-Silicate (CMAS), Volcanic Ash, Fly Ash, and others can adhere to the TBC surfaces of the hot section components. CMAS particulate is often contained in the atmosphere as fine sand and/or dust. The interaction between the TBC and contaminants may result in premature TBC loss over the life of the components.

CMAS infiltration is a phenomenon that is linked to premature TBC spallation. CMAS may melt on the hot section components during the turbine operation and penetrate the strain tolerant porosity of the TBC microstructure. Upon cooling, this penetrated layer stiffens and the induced strain energy can lead to premature TBC spallation.

Rare earth zirconates are often utilized to react with the encroaching CMAS melt which may decrease the depth and rate of infiltration of the melt and hence the strain energy introduced into the coating to delay premature coating spallation. However, formation of this reaction layer is not readily controllable in service, as a number of extrinsic factors such as CMAS deposition rate, surface temperatures, airflow, erosion of the TBC, and foreign object damage may result in variation in penetration depth and the potential resultant damage.

Some alternative coating chemistries based on the Lanthanide series rare earth oxides (La (57) to Lu (71)) such as gadolinium zirconate (GdZr) can form an apatite phase when exposed to certain environmental contaminants. A high temperature apatite phase is capable of reducing the rate of degradation of the TBC in service compared to other coatings such as yittria-stabilized zirconica (YSZ). The development of mechanical property tests (such as modulus, flexural strength, etc.) to evaluate the behavior of TBCs when attacked by environmental contaminants has been limited by the inability to infiltrate the actual environmental contaminants into the system without causing premature spallation of the TBC.

Conventional processes using environmental contaminant chemicals have been primarily focused on the addition of chemicals in a powder or liquid form. The thermal processing required to infiltrate the TBC involves temperatures greater than 2150°F (1177 °C) to fully infiltrate the TBC for testing purposes. When cooled from an isothermal hold at these temperatures, the TBC can experience spallation, including complete separation from the metallic substrate, due to the relatively large mismatch between the coefficients of thermal expansion between the ceramic top coat and the underlying substrate and the lower toughness of the ceramic top coat.

EP 1 806 431, US 2014/0065408 and EP 1 428 902 all relate to thermal barrier coatings for gas turbine engine components.

### SUMMARY

A process for coating a component according to the present invention is provided as claimed in claim 1.

A gas turbine engine component according to the present invention is provided as claimed in claim 5.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of an example gas turbine engine architecture;
Figure 2 is a flowchart of a process according to one disclosed non-limiting embodiment for application of a coating system to a component; and
Figure 3 is a cross-section through the coating system applied in accordance with the process of Figure 2.

### DETAILED DESCRIPTION

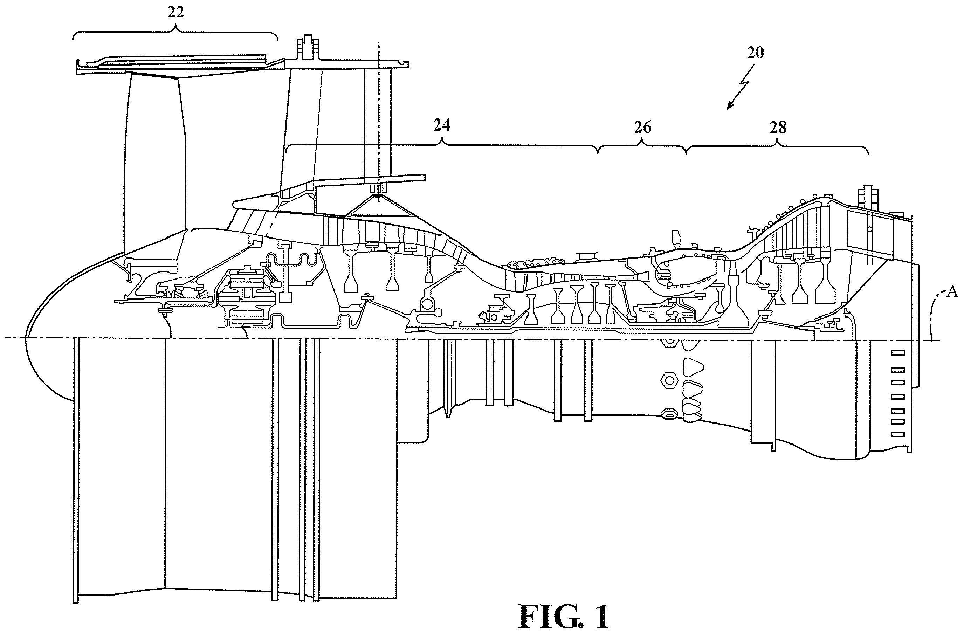

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbomachinery to include, but not be limited to, low bypass augmented turbofans, turbojets, turboshafts, three-spool (plus fan) turbofans and industrial gas turbines.

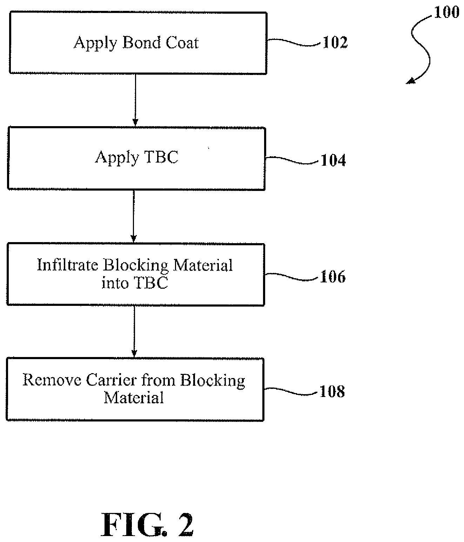

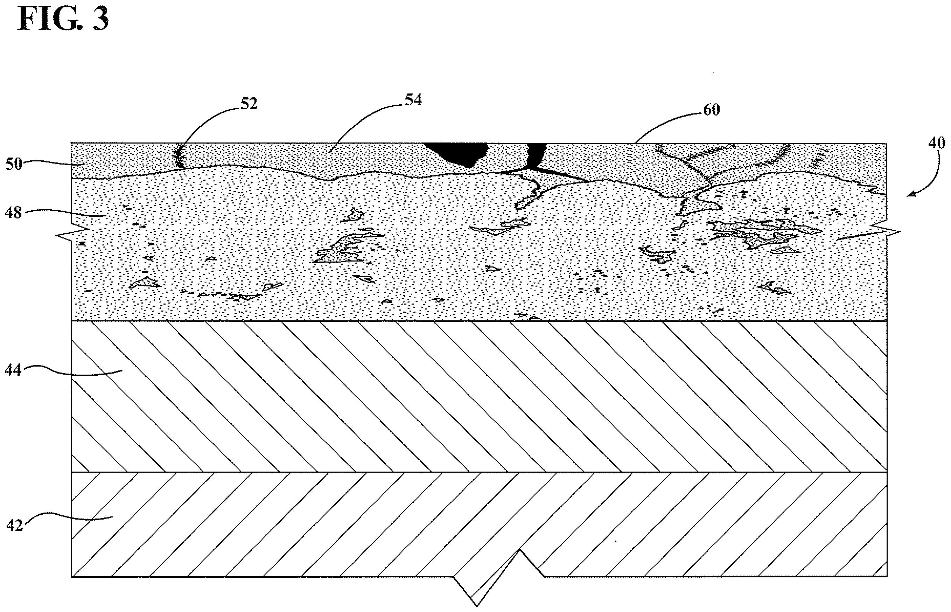

With reference to Figure 2, a process 100 according to one disclosed non-limiting embodiment for application of a coating system 40 to a component 42 (Figure 3) subjected to high temperatures is schematically represented. The steps of the process 100 are schematically disclosed in terms of functional block diagrams as a flowchart. It should be appreciated that alternative of addition steps may be provided without departing from the teaching herein.

Representative examples of the component 42 include but are not limited to combustor section 26 and/or turbine section 28 hardware such as augmentor components, combustor liners, blades, vanes, and blade outer air seals. The coating system 40 as described herein is suitable for protection of a substrate 42 such as a superalloy but while being described with reference to such superalloy gas turbine engine components, the teachings herein are generally applicable to any component on which a Thermal Barrier Coating (TBC) may be used to protect the component from a high temperature environment, particularly environments containing CMAS.

The coating system 40, in one disclosed non-limiting embodiment is manufactured by the process 100 which initially includes application of a bond coat 44 on the substrate 42 (step 102 and Figure 3). The bond coat 44 may include an aluminum-rich composition, such as an overlay coating or a diffusion coating such as a diffusion aluminide or a diffusion platinum aluminide according to formulas such as MCrAlY, MCrAlY +Hf, and MCrAlY + HF+Si, in which M denotes nickel, cobalt, iron, platinum or mixtures thereof; Cr denotes chromium; Al denotes aluminum; and Y denotes yttrium. MCrAlY materials are often referred to as overlay coatings because they are applied in a predetermined composition and do not interact significantly with the substrate 42 during the deposition process. One example preferred MCrAlY bond coat composition has a weight percent compositional range of 5-40 Cr, 8-35 Al, 0.1-2.0 Y, 0.1-7 Si, 0.1-2.0 Hf, balance selected from the group consisting of Ni, Co and mixtures thereof. Alternatively or in addition the bond coat material may include Al, PtAl and the like, that are often referred to as diffusion coatings. Alternatively or in addition, the bond coat material may also include Al, PtAl, MCrAlY as described above, and the like, that are often referred to as cathodic arc coatings.

The bond coat 44 may be applied by any method operable to produce a dense, uniform, adherent coating of the desired composition, such as, but not limited to, an overlay bond coat, diffusion bond coat, cathodic arc bond coat, etc. Such techniques may include, but are not limited to, diffusion processes (e.g., inward, outward, etc.), low pressure plasma-spray, air plasma-spray, sputtering, cathodic arc, electron beam physical vapor deposition, high velocity plasma spray techniques (e.g., HVOF, HVAF), combustion processes, wire spray techniques, laser beam cladding, electron beam cladding, etc.

The particle size for the bond coat 44 may be of any suitable size, and in may be between about 15 microns (0.015 mm) and about 60 microns (0.060 mm) with a mean particle size of about 25 microns (0.025 mm). The bond coat 44 may be applied to any suitable thickness, and may be about 5 mils (0.127 mm) to about 10 mils (0.254 mm) thick. In some embodiments, the thickness may be about 6 mils (0.152 mm) to about 7 mils (0.178 mm) thick.

Next, a thermal barrier coating material 48 (Figure 3), often referred to as a top coat, is applied to the bond coat 44 (step 104). The thermal barrier coating material 48 includes a ceramic based compound, yttria stabilized zirconia (YSZ). Representative thermal barrier coating materials include, but are not limited to: a stabilized zirconate, a stabilized hafnate, combinations including at least one of the foregoing compounds, and the like, for example, yttria stabilized zirconia, calcia stabilized zirconia, magnesia stabilized zirconia, yttria stabilized hafnia, calcia stabilized hafnia and magnesia stabilized hafnia. Yttria stabilized zirconia is commercially available as 7YSZ. One example preferred thermal barrier coating material 48 is a zirconia stabilized by between 6-8wt% yttria that is about 0.05-5 mil (0.00127 - 0.127 mm) in thickness deposited, nominally at 1-3 mil (0.0254- 0.0761 mm).

The thermal barrier coating material 48 may be applied by various known methods. Suitable application methods include, but are not limited to, physical vapor deposition (e.g., electron beam), thermal spray (e.g., air plasma, high velocity oxygen fuel), sputtering, sol gel, slurry, combinations comprising at least one of the foregoing application processes, and the like.

Next, a blocking material 50 is selectively infiltrated into the thermal barrier coating material 48 to form an exposed surface 60 (step 106; Figure 2). The blocking material 50 includes a filler material 52 within a carrier 54. Examples of the blocking material 50 include, but are not limited to, filled or unfilled pre-ceramic polymer resins, filled sacrificial polymer resin carriers, or combinations thereof. The filler material 52 is a calcium magnesium alumino silicate (CMAS) compound. Examples of the filler materials 52 not according to the invention are pre-reacted volcanic ash powder, other environmental contaminants, such as vanadates and sulfur compounds, ceramic nano-particles, and other particles ranging from 0.1-10 um, and metal organic compounds within a carrier 54 such as a polymer resin, ethanol, jet fuel, and water that forms a solution, suspension, or colloid. For example, the polymer resin operates as a jet fuel or water carrier and the filler may be the same materials listed. The ceramic precursor polymers are capable of conversion to a ceramic upon sufficient heat treatment as well as conversion to a phase such as a rare-earth silicate.

Common methodologies for infiltrating a polymeric based, pre-ceramic or otherwise, blocking material 50 into a porous solid form would include, but are not limited to, vacuum, temperature, and pressure assisted processes that may improve the natural filling obtained by capillary forces. A common embodiment of such a process could involve dipping or submerging a porous system 40 in a bath of polymer resin allowing infiltration into the structure. Controlling the exposure time and the temperature of the process could enable selective infiltration to partial depths. This process would then be followed by appropriate heat treatments to enable the conversion of the system to the desired phase.

An alternative deposition methodology for the blocking material 50 includes Suspension Plasma Spray (SPS) or Suspension Precursor Plasma Spray (SPPS) which facilitate a wide range of chemistries and microstructures to simultaneously optimize cost and strain tolerance. SPS is a form of plasma spraying where the ceramic feedstock is dispersed in a liquid suspension before being injected into the plasma jet which facilities deposition of finer microstructures through the use of finer powders. SPPS is a solution based process by which a solution of soluble metal cations is injected into a plasma plume. For SPS, the source material for the blocking material 50 may be provided as sub-micron particles dispersed in alcohol, water, or another suitable carrier. For SPPS the source material for the blocking material 50 may be provided as metal salts or metal-organic compounds that would be dispersed in alcohol, water, or other suitable carrier, i.e., Calcium Nitrate + Tetra-ethyl-ortho-silicate + rare earth nitrate in an alcohol solution.

The carrier 54 of the blocking material 50 is then removed (step 108) to form a second phase that alters the thermal barrier coating material 48 with an essentially pre-sealed structure. The blocking material 50 is infiltrated into the thermal barrier coating material 48 to a depth of, for example, about 10 microns (0.39 mil; 0.01mm). The carrier 54 is removed via an engine "green run" heat treat procedure, to react the materials to form the desirable stable, high temperature, ceramic phase such as a rare-earth apatite. That is, the carrier 54 is removed during manufacture and/or initial testing operations, i.e., "green run" that is typical of gas turbine engine initial operations.

The process 100 provides for selective infiltration, into the thermal barrier coating material 48 to form multi-phase material layer coating system 40. The coating system 40 forms a multi-phase pre-reacted surficial region, to mitigate or completely eliminate damage to thermal barrier coating material 48 by CMAS or other contaminants on hot section gas turbine engine components.

Potential uses of the altered thermal barrier coating material 48 include, but are not limited to, improving the environmental contaminant resistance of altered thermal barrier coating material 48 coated components through the formation of the multi-phase pre-reacted surficial region, subsequently improving the temperature capability of the altered thermal barrier coating material 48, and evaluating the mechanical properties of potentially compromised (contaminated) altered thermal barrier coating material 48 structures.

The modifications of the material proposed should not be limited to altered thermal barrier coating material 48 and may be applicable to any porous ceramic or metallic material for the above described purposes, among others.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown and described, it should be understood that steps may be performed in any order, repeated any number of times, separated or combined unless otherwise indicated and will still benefit from the present disclosure.

The foregoing description is exemplary rather than defined by the limitations within. Various non-limiting embodiments are disclosed herein.

## Claims

1. A process for coating a component (42) of a gas turbine engine, comprising:
applying a bond coat (44) on a substrate (42) of the component (42);
applying a thermal barrier coating material (48) comprising yttria stabilized zirconia (YSZ) to the bond coat (44); and
selectively infiltrating a blocking material (50) into the thermal barrier coating material (48), wherein the blocking material (50) includes a filler material (52) and a carrier (54), wherein the filling material (52) is a calcium magnesium alumino silicate (CMAS) compound;
removing the carrier (54) of the blocking material; wherein removing the carrier (54) of the blocking material (50) is effectuated via a heat treat process during initial gas turbine engine initial operations, wherein removing the carrier (54) of the blocking material (50) is effectuated during the reaction of the materials to formation of high temperature rare-earth silicate phases.

2. The process as recited in claim 1, wherein the blocking material (50) is infiltrated via one of Suspension Plasma Spray (SPS) and Suspension Precursor Plasma Spray (SPPS) to form an exposed surface (60).

3. The process as recited in claim 1 or 2, wherein selectively infiltrating a blocking material (50) into the thermal barrier coating material (48) forms a multi-phase pre-reacted surficial region.

4. The process as recited in any preceding claim, wherein the blocking material (50) is infiltrated into the thermal barrier coating material (48) to a depth of less than 50 micrometer.

5. A gas turbine engine component (42), comprising:
a superalloy substrate (42);
a bond coat (44) on the substrate (42);
a thermal barrier coating material (50) on the bond coat (44), the thermal barrier coating material (48) comprising yttria stabilized zirconia (YSZ); and
a blocking material (50) infiltrated into the thermal barrier coating material (50) to a depth of less than 50 micrometer, the blocking material including a filler material (52) and a carrier (54);
wherein the filler material (52) is a calcium magnesium alumino silicate (CMAS) compound, and the carrier (54) comprises a polymer resin.

## Patentansprüche

1. Verfahren zum Beschichten einer Komponente (42) eines Gasturbinenmotors, umfassend:
Aufbringen eines Haftvermittlers (44) auf ein Substrat (42) der Komponente (42);
Aufbringen eines Wärmedämmschichtmaterials (48), das Yttrium-stabilisiertes Zirconiumdioxid (YSZ) umfasst, auf den Haftvermittler (44); und
selektives Eindringenlassen eines Blockiermaterials (50) in das Wärmedämmschichtmaterial (48), wobei das Blockiermaterial (50) ein Füllmaterial (52) und einen Träger (54) beinhaltet, wobei das Füllmaterial (52) eine Calciummagnesiumalumosilicat(CMAS)-Verbindung ist;
Entfernen des Trägers (54) des Blockiermaterials; wobei das Entfernen des Trägers (54) des Blockiermaterials (50) über einen Wärmebehandlungsvorgang während der ersten Inbetriebnahme des Gasturbinenmotors erfolgt, wobei das Entfernen des Trägers (54) des Blockiermaterials (50) während der Reaktion der Materialien zur Bildung von Hochtemperatur-Seltenerd-Silicatphasen erfolgt.

2. Verfahren nach Anspruch 1, wobei das Eindringenlassen des Blockiermaterials (50) über eines aus Suspensionsplasmaspritzen (SPS) und Suspensionsvorläufer-Plasmaspritzen (SPPS), um eine freiliegende Fläche (60) zu bilden, erfolgt.

3. Verfahren nach Anspruch 1 oder 2, wobei das selektive Eindringenlassen eines Blockiermaterials (50) in das Wärmedämmschichtmaterial (48) eine mehrphasige vorrreagierte Oberflächenregion bildet.

4. Verfahren nach einem der vorstehenden Ansprüche, wobei das Eindringenlassen des Blockiermaterials (50) in das Wärmedämmschichtmaterial (48) bis zu einer Tiefe von weniger als 50 Mikrometer erfolgt.

5. Gasturbinenmotorkomponente (42), umfassend:
ein Superlegierungssubstrat (42);
einen Haftvermittler (44) auf dem Substrat (42);
ein Wärmedämmschichtmaterial (50) auf dem Haftvermittler (44), wobei das Wärmedämmschichtmaterial (48) Yttrium-stabilisiertes Zirconiumdioxid (YSZ) umfasst; und
ein Blockiermaterial (50), das in das Wärmedämmschichtmaterial (50) bis zu einer Tiefe von weniger als 50 Mikrometer eindringen gelassen wird,
wobei das Blockiermaterial ein Füllmaterial (52) und einen Träger (54) beinhaltet;
wobei das Füllmaterial (52) eine Calciummagnesiumalumosilicat(CMAS)-Verbindung ist und der Träger (54) ein Polymerharz umfasst.

## Revendications

1. Procédé de revêtement d'un composant (42) d'un moteur de turbine à gaz, comprenant :
l'application d'un revêtement de liaison (44) sur un substrat (42) du composant (42) ;
l'application d'un matériau de revêtement de barrière thermique (48) comprenant de la zircone stabilisée à l'oxyde d'yttrium (YSZ) sur le revêtement de liaison (44) ; et
l'infiltration sélective d'un matériau de blocage (50) dans le matériau de revêtement de barrière thermique (48), dans lequel le matériau de blocage (50) comporte un matériau de remplissage (52) et un support (54), dans lequel le matériau de remplissage (52) est un composé alumino-silicate de calcium et de magnésium (CMAS) ;
le retrait du support (54) du matériau de blocage ; dans lequel le retrait du support (54) du matériau de blocage (50) est effectué par l'intermédiaire d'un processus de traitement thermique pendant les opérations initiales du moteur de turbine à gaz, dans lequel le retrait du support (54) du matériau de blocage (50) est effectué pendant la réaction des matériaux à la formation de phases de silicate de terres rares à haute température.

2. Procédé selon la revendication 1, dans lequel le matériau de blocage (50) est infiltré par l'intermédiaire de l'une parmi la pulvérisation par plasma en suspension (SPS) et la pulvérisation par plasma précurseur en suspension (SPPS) pour former une surface exposée (60).

3. Procédé selon la revendication 1 ou 2, dans lequel l'infiltration sélective d'un matériau de blocage (50) dans le matériau de revêtement de barrière thermique (48) forme une région de surface avec des phases multiples préréagissée.

4. Procédé selon une quelconque revendication précédente, dans lequel le matériau de blocage (50) est infiltré dans le matériau de revêtement de barrière thermique (48) jusqu'à une profondeur inférieure à 50 micromètres.

5. Composant de moteur de turbine à gaz (42), comprenant :
un substrat en superalliage (42) ;
un revêtement de liaison (44) sur le substrat (42) ;
un matériau de revêtement de barrière thermique (50) sur le revêtement de liaison (44), le matériau de revêtement de barrière thermique (48) comprenant de la zircone stabilisée à l'oxyde d'yttrium (YSZ) ; et
un matériau de blocage (50) infiltré dans le matériau de revêtement de barrière thermique (50) jusqu'à une profondeur inférieure à 50 micromètres,
le matériau de blocage comportant un matériau de remplissage (52) et un support (54) ;
dans lequel le matériau de remplissage (52) est un composé alumino-silicate de calcium et de magnésium (CMAS), et le support (54) comprend une résine polymère.
